# EUROPEAN PATENT SPECIFICATION

(11) **EP 2 426 313 B1**
(45) Date of publication and mention of the grant of the patent: **24.05.2017**
(21) Application number: 11179681.9
(22) Date of filing: 01.09.2011
(51) Int. Cl.: B62M 19/00

(54) **Transmission comprising centrifugal impellers**
Wandler mit zentrifugalen Impellern
Convertisseur comprenant des roues centrifuges

(30) Priority: 07.09.2010 TW 099217280
(43) Date of publication of application: 07.03.2012
(73) Proprietor: Chen, Chun-Chieh, Taichung City 403 (TW)
(72) Inventor: Chen, Chun-Chieh, Taichung City 403 (TW)
(74) Representative: Horak, Michael

(56) References cited:
- EP-A- 0 097 924
- EP-A1- 0 761 977
- EP-A2- 2 080 876
- EP-B1- 0 988 474
- WO-A-2006/083320
- WO-A1-2009/065416
- WO-A2-02/16775
- DE-A1- 3 418 946
- DE-B1- 1 425 770
- FR-A- 1 185 232
- GB-A- 191 321 839
- US-A- 2 230 545
- US-A- 3 197 176
- US-A- 5 932 940
- US-A1- 2007 154 303

## Description

### BACKGROUND OF THE INVENTION

Technological advances have allowed swifter and more efficient conveyances. The challenge for manufacturers is to reconcile maximum functions with minimum costs. Design must incorporate simpler structures, whose weight may be reduced by the availability of composite materials. For the human needs, engineering also works persistently towards greater convenience.

The torque converter dispenses with the need for multiple gear ratios and therefore the more complex and cumbersome reduction gear assembly. Its main structure, being made of plastic, is relatively lightweight. It is easier to use and maintain, and enables greater energy efficiency, longer journey distances and higher speeds.

### SUMMARY OF THE INVENTION

The purpose of the device is to attain acceleration by the transformation of air pressure into torque.

A transmission to be installed in a regular bicycle or an electrical bike that has a wheel hub, characterized in that the transmission comprises an active centrifugal impeller, a top plate and a passive centrifugal impeller; an outer ring of a single direction bearing is installed in a direction along a center line in a shaft sleeve of the active centrifugal impeller; the top plate is mounted along the centre line on an upper surface of blades to the passive centrifugal impeller; whereby the transmission is activated when the outer ring of the single direction bearing is rotated, and an inner ring of the single direction bearing and the active centrifugal impeller are rotated together, and the active centrifugal impeller generates air pressure to rotate the passive centrifugal impeller, and the passive centrifugal impeller generates torque to rotate a wheel hub and a shaft and attain acceleration.

The primary parts of the transmission assembly are an active centrifugal impeller, a top plate and a passive centrifugal impeller. External force is applied to rotate the outer ring of the single direction bearing and thereby the active centrifugal impeller. The rotation of the active impeller generates air pressure which in turn rotates the passive centrifugal impeller. The rotation of the passive impeller supplies direct drive to the wheel hub.

The volume of compressed air to be generated, and the distinct function of each impeller in the process, determines their rates of rotation, the spacing and quantity of the blades, the contours of the blades, the area of their windward faces and their consequent cubic capacity. The impellers therefore have discrete forms, all these elements collectively being indispensable to the desired degree of propulsive power.

The features of the transmission are shown below:
1. The blades of the active centrifugal impeller radiate from the central shaft sleeve.
2. The active centrifugal impeller is combined with a top plate.
3. The inlets of the active centrifugal impeller are located in the gap between the rim of the shaft sleeve and the inner diameter of the top plate, and between the exposed sections of the upper edges of the blades. The rotation of the active centrifugal impeller draws air through the inlets.
4. The structure of the active centrifugal impeller derives from design specifications established for high wind resistance.
5. The passive centrifugal impeller comprises both a top plate, which functions as a compressive wall, and a bottom plate, on which it is seated.
6. When external force is applied to rotate the outer shaft of the single direction bearing and the active centrifugal impeller, this then generates air pressure to rotate the passive centrifugal impeller. The rotation of the passive centrifugal impeller in turn rotates the wheel hub, and generates the torque required for acceleration.
7. As the applied external force is increased, the rate of rotation of the active centrifugal impeller, the volume of air that is thereby pressurized, and the torque generated by the passive centrifugal impeller is increased proportionally.
8. The transmission assembly can be fitted to conventional bicycles or electric bikes with single gear transmissions, such as are currently manufactured and available on the market.

### BRIEF DESCRIPTION OF THE DRAWINGS

- FIG 1: is an exploded view of the transmission.
- FIG 2: is an exploded view of the transmission.

### DETAILED DESCRIPTION OF THE PREFERRED EMBODIMENT

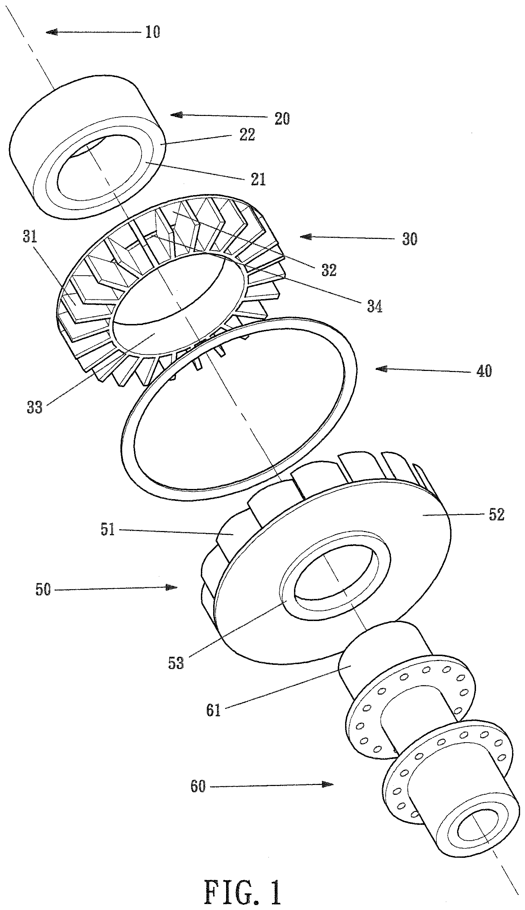

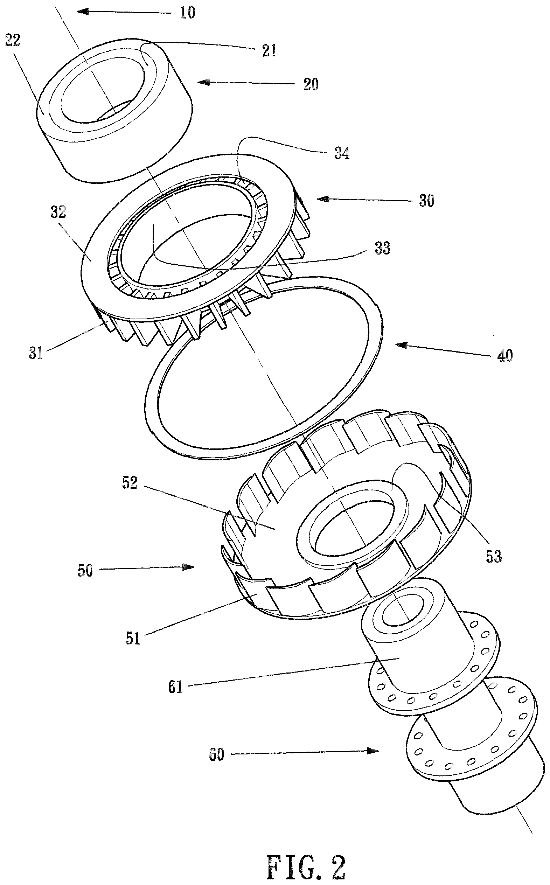

The paragraphs A - F that follow refer to figs. 1 and 2 below, showing the transmission assembly and its parts, and the annotations therewith. A. describes the structure of the transmission. B. describes the structure and function of the active centrifugal impeller 30. C. describes the structure of the top plate 40. D. describes the structure and function of the passive centrifugal impeller 50. E. is a series of instructions for the assembly procedure. F. is the description of use.
A. The structure of the transmission is composed of the active centrifugal impeller 30, the top plate 40 and the passive centrifugal impeller 50 (as shown in FIG 1 and FIG 2).
B. The active centrifugal impeller 30 is composed of radial blades 31, a top plate 32 and shaft sleeve 33. The inlets 34 are formed by the spaces between the radial blades 31, where the upper edges of these are exposed between the inner circumference of the top plate 32 to the active centrifugal impeller 30 and the rim of the shaft sleeve 33. The radial blades 31 the top plate 32 and the shaft sleeve 33 are molded as a single unit; air is drawn via the inlets 34 into the spaces between the radial blades 31 (as shown in FIG 1 and FIG 2).
C. The top plate 40 to the passive centrifugal impeller 50 is a flat ring, superincumbent to the upper edges of the blades 51 to the passive centrifugal impeller 50, whose width corresponds to the distance between the inner and outer diameters of the ring formed in plan by the curved blades 51 of the passive centrifugal impeller 50. The top plate 40 to the passive centrifugal impeller 50 functions as a compressive wall for directing the air flow into the passive centrifugal impeller 50 (as shown in FIG 1 and FIG 2).
D. The passive centrifugal impeller 50 is composed of blades 51 seated on the bottom plate 52, each curving in plan inwards from the outer perimeter of the bottom plate 52, and a shaft sleeve 53. The blades 51 to the passive centrifugal impeller 50 and the bottom plate 52 are molded in a single unit. Pressurized air is forced through the space constrained by the top plate 40 to the passive centrifugal impeller 50 into the spaces contained by the blades 51 inducing rotation of the passive centrifugal impeller 50 (as shown in FIG 1 and FIG 2).
E. The single direction bearing 20 and a wheel hub 60 are given parts of the machine to which the transmission device is to be fitted. Firstly, follow the centre line 10 and position the top plate 40 to the passive centrifugal impeller 50 on the upper surface of the blades 51 of the passive centrifugal impeller 50, ensuring that the outer circumference of the top plate 40 is in line with that of the bottom plate 52. Secondarily, following the centre line 10, position the shaft sleeve 53 of the passive centrifugal impeller 50 on the wheel shaft 61 of the wheel hub 60. Thirdly, following the centre line 10, insert the outer ring 22 of the single direction bearing 20 into the shaft sleeve 33 of the active centrifugal impeller 30, and insert the wheel shaft 61 of the wheel hub 60 into the inner ring 21 of the single direction bearing 20. This completes the assembly.
F. As a general principle, the feature of single direction bearing 20 is when the external force rotates the outer ring 22, the inner ring 21 is rotated at the same time; when the outer ring 22 of the single direction bearing 20 stop, but the inner ring 21 can be rotated. When the outer ring 22 of the single direction bearing 20 is rotated, the inner ring 21 of the single direction bearing 20, the active centrifugal impeller 30, the passive centrifugal impeller 50 and the wheel hub 60 are rotated at all. At the same time, the active centrifugal impeller 30 generates air power to rotate the passive centrifugal impeller 50, and the passive centrifugal impeller 50 generates torque to rotate the wheel hub 60 and to speed up conveyances.

## Claims

1. A transmission to be installed in a regular bicycle or an electrical bike that has a wheel hub (60), **characterized in that** the transmission comprises an active centrifugal impeller (30), a top plate (40) and a passive centrifugal impeller (50); an outer ring (22) of a single direction bearing (20) installed in a direction along a center line (10) in a shaft sleeve (33) of the active centrifugal impeller (30); the top plate (40) mounted along the centre line (10) on an upper surface of blades (51) to the passive centrifugal impeller (50); whereby the transmission is activated when the outer ring (22) of the single direction bearing (20) is rotated, and an inner ring (21) of the single direction bearing (20) and the active centrifugal impeller (30) are rotated together, and the active centrifugal impeller (30) generates air pressure to rotate the passive centrifugal impeller (50), and the passive centrifugal impeller (50) generates torque to rotate a wheel hub and a shaft and attain acceleration.

2. A transmission according to claim 1, **characterized in that** the blades (51) of the active centrifugal impeller (30) radiate from the shaft sleeve (53) to form a single molded unit, and inlets (34) are distributed between the shaft sleeve (53) and an inner circumference of the top plate (40).

3. A transmission according to claim 1, **characterized in that** the passive centrifugal impeller (50) is formed in a single unit with a bottom plate (52).

## Patentansprüche

1. Wandler zur Montage in einem gewöhnlichen Fahrrad oder einem Elektrofahrrad, das eine Radnabe (60) hat, **gekennzeichnet dadurch, dass** der Wandler einen aktiven zentrifugalen Impeller (30) umfasst, eine obere Platte (40) und einen passiven zentrifugalen Impeller (50); einen Außenring (22) eines Einzelrichtungslagers (20), der in einer Richtung entlang einer Achse (10) in einer Wellenhülse (33) des aktiven zentrifugalen Impellers (30) installiert ist; wobei die obere Platte (40) entlang der Mittellinie (10) auf einer oberen Fläche von Schaufeln (51) an den passiven zentrifugalen Impeller (50) montiert ist; wobei der Wandler aktiviert wird, wenn der Außenring (22) des Einzelrichtungslagers (20) gedreht wird, und ein Innenring (21) des Einzelrichtungslagers (20) und der aktive zentrifugale Impeller (30) zusammen gedreht werden, und der aktive zentrifugale Impeller (30) erzeugt Luftdruck, um den passiven zentrifugalen Impeller (50) rotieren zu lassen, und der passive zentrifugale Impeller (50) erzeugt Drehmoment, um eine Radnabe und eine Welle rotieren zu lassen und Beschleunigung zu erreichen.

2. Wandler nach Anspruch 1, **gekennzeichnet dadurch, dass** die Schaufeln (51) des aktiven zentrifugalen Impellers (30) von der Wellenhülse (53) strahlenförmig ausgehen, um ein einziges Formteil zu bilden, und Einlässe (34) zwischen der Wellenhülse (53) und einem Innenumfang der oberen Platte (40) verteilt sind.

3. Wandler nach Anspruch 1, **gekennzeichnet dadurch, dass** der passive zentrifugale Impeller (50) als Einheit mit einer Grundplatte (52) gebildet ist.

## Revendications

1. Convertisseur à être installé dans une bicyclette régulière ou un vélo électrique qui a un moyeu de roue (60), **caractérisé en ce que** le convertisseur comprend une roue centrifuge active (30), une plaque supérieure (40) et une roue centrifuge passive (50); un anneau extérieur (22) d'un roulement unidirectionnel (20) installé dans une direction le long d'une ligne centrale (10) dans une chemise d'arbre (33) de la roue centrifuge active (30); la plaque supérieure (40) montée le long de la ligne centrale (10) sur une surface supérieure des ailettes (51) à la roue centrifuge passive (50); de sorte que le convertisseur est activé quand l'anneau extérieur (22) du roulement unidirectionnel (20) est tourné, et un anneau intérieur (21) du roulement unidirectionnel (20) et la roue centrifuge active (30) sont tournés ensemble, et la roue centrifuge active (30) génère une pression d'air pour faire tourner la roue centrifuge passive (50), et la roue centrifuge passive (50) génère un couple de torsion pour faire tourner un moyeu de roue et un arbre et atteindre une accélération.

2. Convertisseur selon la revendication 1, **caractérisé en ce que** les ailettes (51) de la roue centrifuge active (30) rayonnent de la chemise d'arbre (53) pour former une seule unité moulée, et des entrées (34) sont distribuées entre la chemise d'arbre (53) et une circonférence intérieure de la plaque supérieure (40).

3. Convertisseur selon la revendication 1, **caractérisé en ce que** la roue centrifuge passive (50) est formée en une seule unité avec une plaque de base (52).
